(19) Europäisches Patentamt
European Patent Office
Office européen des brevets

(11) **EP 2 253 968 A2**

(12) **EUROPÄISCHE PATENTANMELDUNG**

(43) Veröffentlichungstag:
**24.11.2010 Patentblatt 2010/47**

(51) Int Cl.:
***G01S 7/52*** *(2006.01)*     ***G01R 31/00*** *(2006.01)*

(21) Anmeldenummer: **10163101.8**

(22) Anmeldetag: **18.05.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **19.05.2009 DE 102009021986**

(71) Anmelder: **KMT Külzer Medizintechnik GmbH 56073 Koblenz (DE)**

(72) Erfinder: **Aybar, Kadir 56170, Bendorf (DE)**

(74) Vertreter: **Naeven, Ralf König & Naeven Patent- und Rechtsanwaltskanzlei Kackertstrasse 10 52072 Aachen (DE)**

(54) **Testvorrichtung für eine Ultraschallsonde, Ultraschallmessvorrichtung und Verfahren zum Testen einer Ultraschallsonde**

(57) Es werden eine Testvorrichtung für eine Ultraschallsonde, eine Ultraschallmessvorrichtung sowie ein Verfahren zum Testen einer Ultraschallsonde vorgeschlagen. Die Testvorrichtung weist eine Vielzahl von Signalleitungen auf und umfasst

a) ein Anschlusselement mit einer Aufnahme für einen Stecker der Ultraschallsonde, wobei das Anschlusselement zumindest eine Teilmenge der Signalleitungen mittelbar oder unmittelbar elektrisch kontaktiert,

b) eine Messeinheit zur automatisierten Messung der an der jeweiligen kontaktierten Signalleitung feststellbaren Kapazität,

c) Mittel zum vergleichen der festgestellten Kapazitätswerte mit Sollwerten, sowie

d) eine Anzeigeeinheit zur Anzeige eines festgestellten Fehlers.

In dem Ultraschallmessgerät kann vorteilhaft eine solche Testvorrichtung integriert sein. Das Verfahren kennzeichnet sich dadurch, dass zumindest ein Teil der Signalleitungen der Ultraschallsonde elektrisch kontaktiert, die Kapazität jeder kontaktierten Signalleitung überprüft und mit einem Sollwert der Kapazität verglichen wird.

EP 2 253 968 A2

**Beschreibung**

Die Erfindung betrifft eine Testvorrichtung für eine Ultraschallsonde, eine Ultraschallmessvorrichtung sowie ein Verfahren zum Testen einer Ultraschallsonde.

Ultraschallmessgeräte werden zur Untersuchung von Gegenständen, z. B. zur Qualitätskontrolle, sowie insbesondere für medizinische Zwecke zur Untersuchung von tierischen und menschlichen Körpern eingesetzt. Die zur Untersuchung verwendeten Ultraschallwellen werden mit in einer Ultraschallsonde angeordneten piezo-elektrischen Kristallen erzeugt. Reflektierte Ultraschallwellen können mit diesen Kristallen auch wieder nachgewiesen werden. Insbesondere in Systemen für die Medizintechnik sind in der Regel eine Vielzahl derartiger Kristalle in der Sonde angeordnet, die eine flächige oder räumliche Information über das untersuchte Objekt erlauben. Die einzelnen Kristalle sind jeweils an eine Signalleitung angeschlossen. Die regelmäßige Überwachung der Funktionalität eines Ultraschallgeräts, insbesondere seiner Sonde, ist essentiell, da Störungen in der Sonde nicht in jedem Falle vom bedienenden Personal erkannt werden. Fehldiagnosen, die für den zu untersuchenden Patienten möglicherweise fatal sind, können in einem Störungsfall nicht ausgeschlossen werden.

Vorrichtung und Verfahren zum Testen von Ultraschallgeräten und deren Sonden sind bekannt (siehe z. B. EP 1629779 B1). Dabei wird ein Testobjekt mittels der zu überprüfenden Ultraschallvorrichtung untersucht. Abweichungen von dem Sollergebnis können dann Hinweise auf einen vorhandenen Fehler geben. Testuntersuchungen mit einem gesonderten Testobjekt sind aber in der Regel zeit- und damit kostenaufwändig.

Es ist nun Aufgabe der vorliegenden Erfindung, eine Testvorrichtung, ein Ultraschallmessgerät sowie ein Verfahren zum Testen von Ultraschallsonden zur Verfügung zu stellen, mit denen eine zuverlässige und einfache Funktionsprüfung von Ultraschallsonden möglich ist.

Bei einer Testvorrichtung für eine Ultraschallsonde wird diese Aufgabe durch die Merkmale des Anspruchs 1 gelöst.

Des Weiteren wird diese Aufgabe bei einer Ultraschallmessvorrichtung durch die Merkmale des Anspruchs 4 und bei einem Verfahren zum Testen einer Ultraschallsonde durch die Merkmale des Anspruchs 5 gelöst.

Das System Signalleitung, piezo-elektrischer Kristall sowie Steckeranschluss kann als eine elektrische Einheit mit bestimmter elektrischer Kapazität betrachtet werden. Störungen dieses Systems, insbesondere ein Kabelbruch in der Signalleitung, ein Kontaktverlust oder ein Kurzschluss führen in aller Regel zu einer Veränderung der zugehörigen Kapazität. Diesen Umstand macht sich die Erfindung zunutze, um Fehler in der Ultraschallsonde zuverlässig festzustellen.

Die Kapazität kann dabei auf unterschiedliche Weisen festgestellt werden. Da Kapazitäten immer mit einem Scheinwiderstand verbunden sind, kann die Kapazität z.B. über den Scheinwiderstand bestimmt werden. Diese Methode ist zwar grundsätzlich simpel, weist aber einen für die hier betroffenen Anforderungen geringen Messbereich auf.

Des Weiteren kann die Kapazität mittels einer Wechselstrommessbrücke bestimmt werden. Diese Methode bringt zwar einen guten Messbereich mit sich, ist jedoch zeitlich aufwändig, da für jede Messung die jeweiligen veränderbaren Widerstände zum Abgleich der Brücke einzustellen sind.

Vorteilhaft ist es, die Kapazität durch Messung der Aufladezeit zu bestimmen. Diese Verfahrensweise ist grundsätzlich bekannt (siehe z. B. htt2://www.klausrohwer.de/ privat/ hobbiesielektro/ cmess/ index.atm; Stand 30.09.2008). Wird ein kapazitives Bauteil an eine Konstantstromquelle angeschlossen, verändert sich die an dem Bauteil anliegende Spannung linear über der Zeit gemäß der Formel

$$U = \frac{I \cdot t}{C}$$

Misst man also eine Spannungsänderung über ein bestimmtes Zeitintervall, lässt sich hieraus die Kapazität des untersuchten Bauteils ermitteln. Diese Zeitmessung lässt sich z. B. mit einem NE555-Baustein gut durchführen. Dieser Timer enthält zwei Komparatoren, die das Eingangssignal mit ihren Referenzspannungen, welche 1/3 und 2/3 der Versorgungsspannung betragen, vergleichen. Die Komparatoren setzen und reseten den im NE555 enthaltenen RS-Flipflop, der damit ein Rechtecksignal erzeugt. Das Rechtecksignal weist entsprechend der Abhängigkeit der Impulsdauer $t_{Ende}$ - $t_{Start}$ von der Kapazität bei kleinen Kapazitäten eine hohe Frequenz und bei großen Kapazitäten eine entsprechend niedrige Frequenz auf. Das Verhältnis zwischen Impulsdauer und Kapazität ist durch den Widerstand R des kapazitiven Systems bestimmt, wie im Folgenden gezeigt wird:

Die Aufladung einer Kapazität erfolgt exponentiell nach der Formel

$$U(t) = Uvcc \cdot \left( 1 - e^{\frac{-t}{(R \cdot Cx)}} \right)$$

wobei $U_{vcc}$ die Versorgungsspannung ist. Als Schaltschwellen für den NE555-Baustein sind 1/3 $U_{vcc}$ und 2/3 $U_{vcc}$ gesetzt. Hieraus resultieren die folgenden Formeln für die Spannungen zum Beginn und zum Ende der Impulsdauer.

$$U(Start) = 1/3\, Uvcc$$

$$U(Ende) = 2/3\, Uvcc$$

Hieraus ergibt sich durch Einsetzen in die obige Formel und durch äquivalente Umwandlungen folgende Formel für die Kapazität in Abhängigkeit vom Verhältnis der Impulsdauer zum Widerstand.

$$C_X = \frac{(t_{Ende} - t_{Start})}{R \cdot \ln(2)}$$

Weicht nun die bei der Testmessung festgestellte Kapazität von einem zuvor ermittelten Sollwert ab, lässt sich auf einen Schaden innerhalb der Ultraschallsonde schließen. Die Auflösung der Testvorrichtung kann verbessert werden, indem der Widerstand R des Systems vergrößert wird, so dass für die gleiche Kapazität eine längere Zeit zum Messen zur Verfügung steht.

Der Sollwert der Kapazitäten der einzelnen Signalleitungen kann vom Hersteller der Ultraschallsonde vorgegeben werden. Alternativ werden die Soll-Kapazitäten mit der erfindungsgemäßen Testvorrichtung anhand korrekt funktionierender Ultraschallsonden eines bestimmten Typs festgestellt.

Bei geeigneter Messauflösung ist es möglich, zu bestimmen, ob ein festgestellter Schaden im Bereich des Steckers, entlang des Signalkabels, im Bereich des Sondenknickschutzes oder im Sondenelement selbst gegeben ist. Es ist insbesondere im Fall eines Kabelbruches möglich, den Ort des Defekts im Signalkabel auf wenige Zentimeter genau zu bestimmen, da sich die Kapazität des untersuchten Systems entsprechend verringert. Neben einem Kabelbruch kann auch ein Kurzschluss, das heißt eine ungewollte elektrische Verbindung z.B. zwischen benachbarten Signalkabeln, festgestellt werden. Diese führt bei einer Testmessung zu einer überhöhten Kapazität.

Unter Einsatz einer separaten Testvorrichtung können Ultraschallsonden durch einfaches Aufsetzen des Steckers der Sonde auf das entsprechende Anschlusselement der Testvorrichtung getestet werden.

Bei bekanntem Sondentyp kann ein automatisierter Testlauf durchgeführt werden, bei dem für jede untersuchte Signalleitung die anliegende Kapazität festgestellt und mit einem Sollwert verglichen wird. Eine Anzeigeneinheit zeigt dem Nutzer dann an, ob die Ultraschallsonde korrekt funktioniert oder ob ein Fehler vorliegt. Dabei kann in der Regel auch die Art des Fehlers sowie der Ort des Fehlers angegeben werden, wodurch eine Reparatur des Gerätes erleichtert wird. Um die Vielzahl der Signalleitungen, z.B. 128, durchmessen zu können, werden Multiplexer eingesetzt, z.B. sechzehn 8-Kanal-Multiplexer.

Eine solche Testvorrichtung kann auch bereits Bestandteil eines Ultraschallmessgerätes sein. So könnte im Ultraschallmessgerät standardmäßig über einen elektronischen Zeitplan vorgegeben werden, zu bestimmten Zeitpunkten eine Testmessung durchzuführen. Die Zeitpunkte können kalendarisch vorgegeben oder in abhängig von der Nutzung sein, z. B. vor jeder Messung, unmittelbar nach jedem Einschalten des Geräts oder vor jeder 20. Messung. Die Testmessung kann dann automatisch gestartet werden oder die bedienende Person wird über eine Anzeige daran erinnert, den Testlauf zu starten.

**Patentansprüche**

1. Testvorrichtung für eine Ultraschallsonde, wobei die Ultraschallsonde eine Vielzahl von Signalleitungen aufweist, umfassend

   a) ein Anschlusselement mit einer Aufnahme für einen Stecker der Ultraschallsonde, wobei das Anschlusselement zumindest eine Teilmenge der Signalleitungen mittelbar oder unmittelbar elektrisch kontaktiert,
   b) eine Messeinheit zur automatisierten Messung der an der jeweiligen kontaktierten Signalleitung feststellbaren Kapazität,
   c) Mittel zum vergleichen der festgestellten Kapazitätswerte mit Sollwerten, sowie
   d) eine Anzeigeeinheit zur Anzeige eines festgestellten Fehlers.

2. Testvorrichtung nach Anspruch 1, **dadurch gekennzeichnet, dass** die Messeinheit zumindest einen Multiplexer zur sequenziellen Kontaktierung von mindestens einem Teil der Signalleitungen aufweist.

3. Testvorrichtung nach Anspruch 1 oder 2, **dadurch gekennzeichnet, dass** die Messeinheit zur Bestimmung der Kapazität anhand der Aufladezeit der zu untersuchenden Signalleitung geeignet ist.

4. Ultraschallmessvorrichtung, **dadurch gekennzeichnet, dass** sie eine Testvorrichtung gemäß den Ansprüchen 1 bis 3 umfasst.

5. Verfahren zum Testen einer Ultraschallsonde mit einer Vielzahl von Signalleitungen, bei dem zumindest ein Teil der Signalleitungen der Ultraschallsonde elektrisch kontaktiert, die Kapazität jeder kontaktier-

**EP 2 253 968 A2**

ten Signalleitung überprüft und mit einem Sollwert der Kapazität verglichen wird.

6. Verfahren nach Anspruch 5, **dadurch gekennzeichnet, dass** die Messung der Kapazität anhand der Aufladezeit der zu untersuchenden Signalleitung erfolgt.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1629779 B1